# EUROPEAN PATENT SPECIFICATION

(11) **EP 3 498 802 B1**
(45) Date of publication and mention of the grant of the patent: **01.09.2021**
(21) Application number: 19155085.4
(22) Date of filing: 30.07.2009
(51) Int. Cl.: C09K 5/04

(54) **USE OF A COMPOSITION CONSISTING DIFLUOROMETHANE AND HFO-1234YF**
VERWENDUNG EINER ZUSAMMENSETZUNG BESTEHEND AUS DIFLUOROMETHAN UND HFO-1234YF
UTILISATION D'UNE COMPOSITION DE DIFLUOROMÉTHANE ET DE HFO-1234YF

(30) Priority: 30.07.2008 US 8499708 P; 23.09.2008 US 9938208 P
(43) Date of publication of application: 19.06.2019
(62) Divisional of application: 18212013.9
(73) Proprietor: Honeywell International Inc., Morris Plains, NJ 07950 (US)
(72) Inventor: SHANKLAND, Ian, Morris Plains, NJ 07950 (US); PHAM, T., Morris Plains, NJ 07950 (US); BASU, Rajat S., Morris Plains, NJ 07950 (US); RICHARD, Robert Gerard, Morris Plains, NJ 07950 (US); BECKER, Justin, Morris Plains, NJ 07950 (US); SINGH, Rajiv Ratna, Morris Plains, NJ 07950 (US); HULSE, Ryan, Morris Plains, NJ 07950 (US)
(74) Representative: Stepney, Gregory John

(56) References cited:
- WO-A1-2010/129920
- WO-A2-2008/027555
- US-A1- 2006 243 945

## Description

### FIELD OF THE INVENTION

This invention relates to a composition having utility in heat transfer systems such as refrigeration systems. In preferred aspects, the present invention is directed to the use of the composition in stationary refrigeration and air conditioning equipment.

### BACKGROUND

Fluorocarbon based fluids have found widespread use in many commercial and industrial applications, including as the working fluid in systems such as air conditioning, heat pump and refrigeration systems, among other uses such as aerosol propellants, as blowing agents, and as gaseous dielectrics.

Heat transfer fluids, to be commercially viable, must satisfy certain very specific and in certain cases very stringent combinations of physical, chemical and economic properties. Moreover, there are many different types of heat transfer systems and heat transfer equipment, and in many cases it is important that the heat transfer fluid used in such systems posses a particular combination of properties that match the needs of the individual system. For example, systems based on the vapor compression cycle usually involve the phase change of the refrigerant from the liquid to the vapor phase through heat absorption at a relatively low pressure and compressing the vapor to a relatively elevated pressure, condensing the vapor to the liquid phase through heat removal at this relatively elevated pressure and temperature, and then reducing the pressure to start the cycle over again.

For example, certain fluorocarbons have been a preferred component in many heat exchange fluids, such as refrigerants, for many years in many applications. Fluoroalkanes, such as chlorofluoromethanes and chlorofluoroethanes, have gained widespread use as refrigerants in applications including air conditioning and heat pump applications owing to their unique combination of chemical and physical properties, such as heat capacity, flammability, stability under the conditions of operation, and miscibility with the lubricant (if any) used in the system. Moreover, many of the refrigerants commonly utilized in vapor compression systems are either single components fluids, or zeotropic, azeotropic mixtures.

Concern has increased in recent years about potential damage to the earth's atmosphere and climate, and certain chlorine-based compounds have been identified as particularly problematic in this regard. The use of chlorine-containing compositions (such as chlorofluorocarbons (CFCs), hydrochlorofluorocarbons (HCFCs) and the like) as refrigerants in air-conditioning and refrigeration systems has become disfavored because of the ozone-depleting properties associated with many of such compounds. There has thus been an increasing need for new fluorocarbon and hydrofluorocarbon compounds that offer alternatives for refrigeration and heat pump applications. For example, it has become desirable to retrofit chlorine-containing refrigeration systems by replacing chlorine-containing refrigerants with non-chlorine-containing refrigerant compounds that will not deplete the ozone layer, such as hydrofluorocarbons (HFCs).

Another concern surrounding many existing refrigerants is the tendency of many such products to cause global warming. This characteristic is commonly measured as global warming potential (GWP). The GWP of a compound is a measure of the potential contribution to the green house effect of the chemical against a known reference molecule, namely, CO₂ which has a GWP = 1. For example, the following known refrigerants possess the following Global Warming Potentials:

| REFRIGERANT | GWP |
|---|---|
| R410A | 1975 |
| R-507 | 3850 |
| R404A | 3784 |
| R407C | 1653 |

While each of the above-noted refrigerants has proven effective in many respects, these material are become increasingly less preferred since it is frequently undesirable to use materials having GWPs greater than about 1000. A need exists, therefore, for substitutes for these and other existing refrigerants having undesirable GWPs.

There has thus been an increasing need for new fluorocarbon and hydrofluorocarbon compounds and compositions that are attractive alternatives to the compositions heretofore used in these and other applications. For example, it has become desirable to retrofit certain systems, including chlorine-containing and certain HFC-containing refrigeration systems by replacing the existing refrigerants with refrigerant compositions that will not deplete the ozone layer, will not cause unwanted levels of global worming, and at the same time will satisfy all of the other stringent requirements of such systems for the materials used as the heat transfer material.

With respect to performance properties, the present applicants have come to appreciate that that any potential substitute refrigerant must also possess those properties present in many of the most widely used fluids, such as excellent heat transfer properties, chemical stability, low- or no- toxicity, low or non-flammability and lubricant compatibility, among others.

With regard to efficiency in use, it is important to note that a loss in refrigerant thermodynamic performance or energy efficiency may have secondary environmental impacts through increased fossil fuel usage arising from an increased demand for electrical energy.

Furthermore, it is generally considered desirable for refrigerant substitutes to be effective without major engineering changes to conventional vapor compression technology currently used with existing refrigerants, such as CFC-containing refrigerants.

Applicants have thus come to appreciate a need for compositions, and particularly heat transfer compositions, that are potentially useful in numerous applications, including vapor compression heating and cooling systems and methods, while avoiding one or more of the disadvantages noted above.

Applicants have also come to appreciate that lubricant compatibility is of particular importance in many of applications. More particularly, it is highly desirably for refrigeration fluids to be compatible with the lubricant utilized in the compressor unit, used in most refrigeration systems. Unfortunately, many non-chlorine-containing refrigeration fluids, including HFC's, are relatively insoluble and/or immiscible in the types of lubricants used traditionally with CFC's and HFC's, including, for example, mineral oils, alkylbenzenes or poly(alpha-olefins). In order for a refrigeration fluid-lubricant combination to work at a desirable level of efficiently within a compression refrigeration, air-conditioning and/or heat pump system, the lubricant should be sufficiently soluble in the refrigeration liquid over a wide range of operating temperatures. Such solubility lowers the viscosity of the lubricant and allows it to flow more easily throughout the system. In the absence of such solubility, lubricants tend to become lodged in the coils of the evaporator of the refrigeration, air-conditioning or heat pump system, as well as other parts of the system, and thus reduce the system performance.

Flammability is another important property for many applications. That is, it is considered either important or essential in many applications, including particularly in heat transfer applications, to use compositions which are non-flammable or of relatively low flammability. As used herein, the term "nonflammable" refers to compounds or compositions which are determined to be nonflammable as determined in accordance with ASTM standard E-681, dated 2002. Unfortunately, many HFC's which might otherwise be desirable for used in refrigerant compositions are not nonflammable. For example, the fluoroalkane difluoroethane (HFC-152a) and the fluoroalkene 1,1,1-trifluorpropene (HFO-1243zf) are each flammable and therefore not viable for use alone in many applications.

Higher fluoroalkenes, that is fluorine-substituted alkenes having at least five carbon atoms, have been suggested for use as refrigerants. U.S. Patent No. 4,788,352 - Smutny is directed to production of fluorinated C₅ to C₈ compounds having at least some degree of unsaturation. The Smutny patent identifies such higher olefins as being known to have utility as refrigerants, pesticides, dielectric fluids, heat transfer fluids, solvents, and intermediates in various chemical reactions. (See column 1, lines 11 - 22).

While the fluorinated olefins described in Smutny may have some level of effectiveness in heat transfer applications, it is believed that such compounds may also have certain disadvantages. For example, some of these compounds may tend to attack substrates, particularly general-purpose plastics such as acrylic resins and ABS resins. Furthermore, the higher olefinic compounds described in Smutny may also be undesirable in certain applications because of the potential level of toxicity of such compounds which may arise as a result of pesticide activity noted in Smutny. Also, such compounds may have a boiling point which is too high to make them useful as a refrigerant in certain applications.

US2006/243945 discloses compositions for use in refrigeration, air-conditioning and heat pump systems wherein the composition comprises a fluoroolefin and at least one other component.

WO 2008/027555 relates to the use of flexible hoses capable of handling high pressure fluids and providing a barrier against permeation loss in air conditioning and refrigeration systems.

### SUMMARY

Applicants have found that one or more of the above-noted needs, and possibly other needs, can be satisfied by the composition for use according to claim 1.

The term "HFO-1234" is used herein to refer to all tetrafluoropropenes. Among the tetrafluoropropenes are included 1,1,1,2-tetrafluoropropene (HFO-1234yf) and both cis- and trans-1, 1, 1, 3-tetrafluoropropene (HFO-1234ze). The term HFO-1234ze is used herein generically to refer to 1, 1,1, 3-tetrafluoropropene, independent of whether it is the cis- or trans- form. The terms "cisHFO-1234ze" and "transHFO-1234ze" are used herein to describe the cis- and trans- forms of 1, 1, 1, 3-tetrafluoropropene respectively. The term "HFO-1234ze" therefore includes within its scope cisHFO-1234ze, transHFO-1234ze, and all combinations and mixtures of these.

### BRIEF DESCRIPTION OF THE DRAWINGS

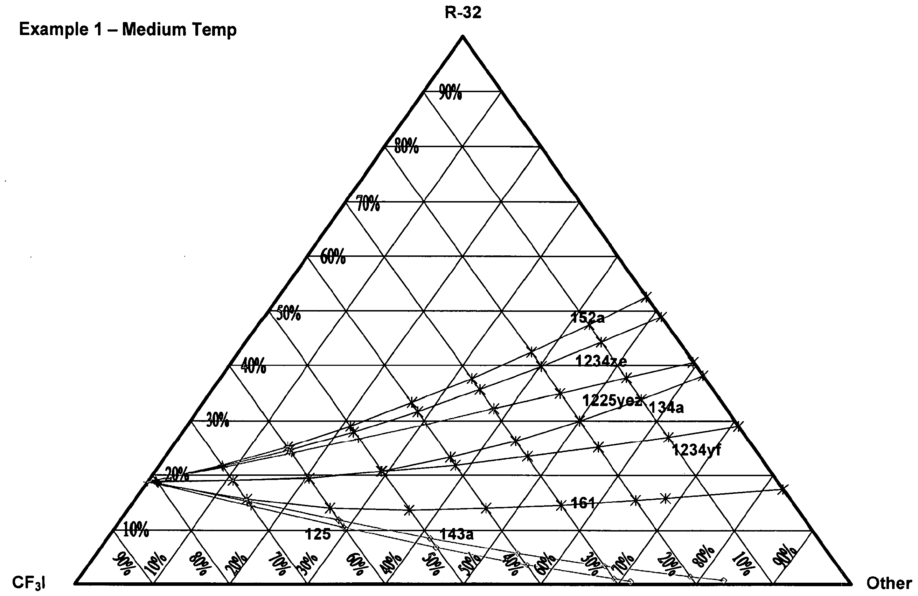

Figures 1 - 12 are ternary composition curves which also show binary compositions at various concentrations of each component for which the capacity substantially matches a known refrigerant, as described in the Reference Examples and Examples hereof.

### DETAILED DESCRIPTION OF PREFERRED EMBODIMENTS

### THE COMPOSITION

One of the advantages of the present invention is the provision of a composition having exceptional flammability properties while retaining other important properties in the desirable range. Applicants have come to appreciate that both R-32 and HFO-1234yf have measurable flame limits at room temperature. However, applicants note that the flame hazard of the compounds in the present composition compares favorably to other HFCs such as R-152a and HCs such as R-290. One way of ranking the flammability of these material is to measure the flame speed of each compound. The maximum flame speed of R-32, R-152a and R-290 have been reported (Jabbour) to be 6.7, 23.0 and 38.5 cm/s, respectively. The flame speed of HFO-1234yf has been measured to be 1.5 cm/s. The flame speed measurements are designed to be measured at room temperature. Since HFO-1234ze(E) is non-flammable at room temperature the flame speed cannot be directly compared to the other values but it is reasonable to expect that the flame speed of HFO-1234ze(E) is less than the flame speed of HFO-1234yf. This would mean that all mixtures of R-32 and HFO-1234ze and/or HFO-1234yf would have a flame speed of less than 6.7 cm/s. In comparing different materials, if a first material has a lower flame speed than a second material, then the first material will have a lower likelihood of stable flame propagation relative to the second material.

Applicants believe that, in general, HFO-1234yf is generally effective and exhibits utility in heat transfer compositions generally and in refrigerant compositions particularly. However, applicants have surprisingly and unexpectedly found that HFO-1234yf exhibits a highly desirable low level of toxicity compared to other of such compounds.

HFO-1234 compounds are known materials and are listed in Chemical Abstracts databases. The production of fluoropropenes such as CF₃CH=CH₂ by catalytic vapor phase fluorination of various saturated and unsaturated halogen-containing C₃ compounds is described in U.S. Patent Nos. 2,889,379; 4,798,818 and 4,465,786. EP 974,571, discloses the preparation of 1,1,1,3-tetrafluoropropene by contacting 1,1,1,3,3-pentafluoropropane (HFC-245fa) in the vapor phase with a chromium-based catalyst at elevated temperature, or in the liquid phase with an alcoholic solution of KOH, NaOH, Ca(OH)₂ or Mg(OH)₂ In addition, methods for producing the HFO-1234 compound in accordance with the present invention are described generally in connection with pending United States Patent Application entitled "Process for Producing Fluorpropenes" bearing attorney docket number (H0003789 (26267)).

The present composition for use in the present invention is believed to possess properties that are advantageous for a number of important reasons. For example, applicants believe, based at least in part on mathematical modeling, that the fluoroolefin of the present invention will not have a substantial negative affect on atmospheric chemistry, being a negligible contributor to ozone depletion in comparison to some other halogenated species. The composition of the present invention thus has the advantage of not contributing substantially to ozone depletion. The composition also does not contribute substantially to global warming compared to many of the hydrofluoroalkanes presently in use.

As used herein, "GWP" is measured relative to that of carbon dioxide and over a 100 year time horizon, as defined in "The Scientific Assessment of Ozone Depletion, 2002, a report of the World Meteorological Association's Global Ozone Research and Monitoring Project,".

As used herein, "ODP" is as defined in "The Scientific Assessment of Ozone Depletion, 2002, A report of the World Meteorological Association's Global Ozone Research and Monitoring Project,".

Many additional compounds or components, including lubricants, stabilizers, metal passivators, corrosion inhibitors, flammability suppressants, and other compounds and/or components that modulate a particular property of the compositions (such as cost for example) may be included in the present compositions, and the presence of all such compounds and components is within the broad scope of the invention.

Accordingly, applicants have recognized that the composition for use in the present invention is used to great advantage in heat transfer applications as a replacement for R410A.

### HEAT TRANSFER COMPOSITIONS

The compositions of the present invention are used in heat transfer applications as a replacement for R410A.

The relative amount of the hydrofluoroolefin used in accordance with the present invention produces a heat transfer fluid which has the required heat transfer capacity, particularly refrigeration capacity, and preferably is at the same time non-flammable. As used herein, the term non-flammable refers to a fluid which is non-flammable in all proportions in air as measured by ASTM E-681.

The compositions of the present invention may include other components for the purpose of enhancing or providing certain functionality to the composition, or in some cases to reduce the cost of the composition. For example, refrigerant compositions according to the present invention, especially those used in vapor compression systems, include a lubricant, generally in amounts of from about 30 to about 50 percent by weight of the composition. Commonly used refrigeration lubricants such as Polyol Esters (POEs) and Poly Alkylene Glycols (PAGs), PAG oils, silicone oil, mineral oil, alkyl benzenes (ABs) and poly(alpha-olefin) (PAO) that are used in refrigeration machinery with hydrofluorocarbon (HFC) refrigerants may be used with the refrigerant compositions of the present invention. Commercially available mineral oils include Witco LP 250 (registered trademark) from Witco, Zerol 300 (registered trademark) from Shrieve Chemical, Sunisco 3GS from Witco, and Calumet R015 from Calumet. Commercially available alkyl benzene lubricants include Zerol 150 (registered trademark). Commercially available esters include neopentyl glycol dipelargonate, which is available as Emery 2917 (registered trademark) and Hatcol 2370 (registered trademark). Other useful esters include phosphate esters, dibasic acid esters, and fluoroesters. In some cases, hydrocarbon based oils have sufficient solubility with the refrigerant that is comprised of an iodocarbon, the combination of the iodocarbon and the hydrocarbon oil might be more stable than other types of lubricant. Such combination may therefore be advantageous. Preferred lubricants include polyalkylene glycols and esters. Polyalkylene glycols are highly preferred in certain embodiments because they are currently in use in particular applications such as mobile air-conditioning. Of course, different mixtures of different types of lubricants may be used.

The present composition for use in the current invention is thus adaptable for use in connection with a wide variety of heat transfer systems in general and refrigeration systems in particular, such as air-conditioning (including both stationary and mobile air conditioning systems), refrigeration, heat-pump systems, and the like. In certain preferred embodiments, the composition of the present invention is used in stationary refrigeration systems, such as stationary air conditioning units and stationary refrigeration originally designed for use with R-410A. The composition for use in the present invention tends to exhibit many of the desirable characteristics of this existing refrigerant, including a GWP that is as low, or lower than the existing refrigerant and a capacity that is as high or higher than such refrigerant and a capacity that is substantially similar to or substantially matches, and preferably is as high as or higher than such refrigerant.

Many existing refrigeration systems are currently adapted for use in connection with the existing refrigerant, R410A, and the composition of the present invention is believed to be adaptable for use in many of such systems, either with or without system modification.

### HFC-32/HFO-1234yf Based Compositions

The composition for use in the present invention consists of a first component which is HFC-32 and a second component which is HFO-1234yf.

Applicants have found that the composition for use in the present invention provides refrigerant fluids that have a global warming potential (GWP) that is much less than R-410A, while at the same time exhibiting performance parameters that are commercially comparable to the previously used refrigerant, R410A. One measure of such performance is provided by AHRI "A" conditions at 95° F. ambient.

Applicants have surprisingly and/or advantageously found that the composition for use in the present invention consisting of 30% by weight of HFO-1234yf, relative to the total weight of a total weight of HFO-1234yf and HFC-32 in the composition, is capable of providing an excellent match in the parameter of capacity and efficiency relative to the refrigerant R-410A while still achieving acceptable performance parameters in connection with discharge.

### METHODS AND SYSTEMS

The composition of the present invention is used as a replacement for R410A in connection with numerous methods and systems, including as heat transfer fluids in methods and systems for transferring heat, such as refrigerants used in refrigeration, air conditioning and heat pump systems. The refrigerant composition used in the invention may be used in heating a fluid or body, comprising condensing the refrigerant composition in the vicinity of the fluid or body to be heated and thereafter evaporating said refrigerant composition. Those skilled in the art will appreciate the substantial advantage of a low GWP and/or a low ozone depleting refrigerant that can be used as a replacement for the refrigerant, R410A, with relatively minimal modifications to the system. The refrigerant composition used in the invention to replace R410A may be used in retrofitting methods which comprise replacing R410A in an existing system with the composition of the present invention, without substantial modification of the system. The replacement step may be a drop-in replacement in the sense that no substantial redesign of the system is required and no major item of equipment needs to be replaced in order to accommodate the composition of the present invention as the heat transfer fluid. The refrigerant composition used in the invention to replace R410A may also be used as a drop-in replacement in which the capacity of the system is at least about 70%, preferably at least about 85%, and even more preferably at least about 90% of the system capacity prior to replacement, and preferably not greater than about 130%, even more preferably less than about 115%, and even more preferably less than about 110%. The refrigerant composition used in the invention to replace R410A may be used as a drop-in replacement in which the suction pressure and/or the discharge pressure of the system, and even more preferably both, is/are at least about 70%, more preferably at least about 90% and even more preferably at least about 95% of the suction pressure and/or the discharge pressure prior to replacement , and preferably not greater than about 130%, even more preferably less than about 115, and even more preferably less than about 110%. The refrigerant composition used in the invention to replace R410A may be used as a drop-in replacement in which the mass flow of the system is at least about 80%, and even more preferably at least 90% of the mass flow prior to replacement, and preferably not greater than about 130%, even more preferably less than about 115, and even more preferably less than about 110%.
The composition used in the invention may be used in producing heating which comprises condensing a refrigerant comprising the composition in the vicinity of a liquid or body to be heated.

### EXAMPLES

### REFERENCE EXAMPLE 1 - Medium Temperature System with HFC-32 and CF₃I

The capacity of a heat transfer composition (and a refrigerant in particular) represents the cooling or heating capacity and provides some measure of the capability of a compressor to pump quantities of heat for a given volumetric flow rate of refrigerant. In other words, given a specific compressor, a refrigerant with a higher capacity will deliver more cooling or heating power.

A refrigeration /air conditioning cycle system is simulated or provided with a condenser temperature is about 40°C, an evaporator temperature of about 2°C, a superheat of about 10°C, and a sub-cool temperature of about 5°C, and a compressor efficiency of 0.7, which would normally be considered typical "medium temperature" conditions. Several compositions are simulated and/or tested based on a first component consisting of HFC-32, a second component consisting of CF₃I and one of a series of third components. For each third component, the relative concentrations of all three components which substantially match the capacity of R-410A under the conditions mentioned above is determined. A curve of the various concentrations of each component for which the capacity substantially matches that of R-410A is then drawn or simulated (visually, mathematically, or a combination of each). An asterix is then placed on the curve to signify those compositions having a GWP of 1000 or less and a diamond is placed on the curve to signify those compositions having a GWP of greater than 1000. This procedure is repeated for all third component compounds and for the second component compound HFO-1225ye-Z. One example of a "tool" for selecting a refrigerant for this system is thus developed and is presented as the chart in Figure 1. The chart in Figure 1 is analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 2 - Medium Temperature System with HFC-32/CO₂ and CF₃I

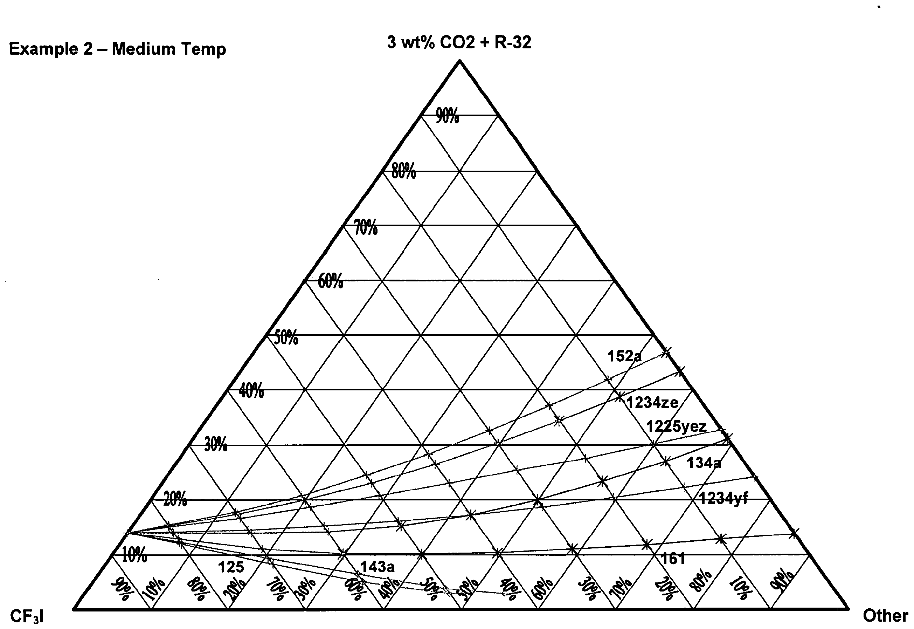

Example 1 is repeated except that the first component of the heat transfer composition consists of 3 percent by weight of CO₂ and 97 percent by weight of HFC-32 and that the refrigerant whose capacity is to be matched is R-410A. The chart in Figure 2 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 3 - Medium Temperature System with HFC-32/CO₂ and CF₃I

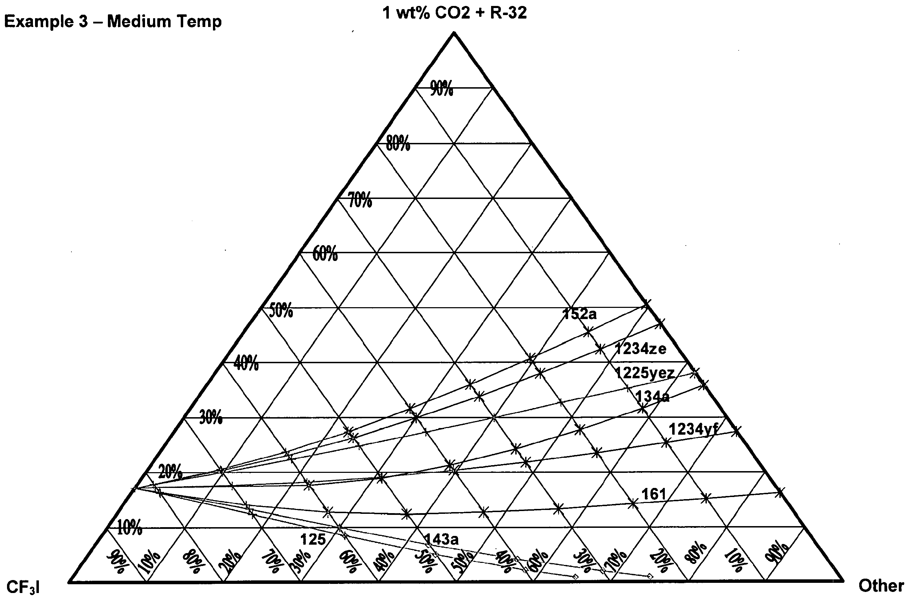

Example 1 is repeated except that the first component of the heat transfer composition consists of 1 percent by weight of CO₂ and 99 percent by weight of HFC-32 and that the refrigerant whose capacity is to be matched is R-410A. The chart in Figure 3 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 4 - Low Temperature System with HFC-32/CO₂ and CF₃I

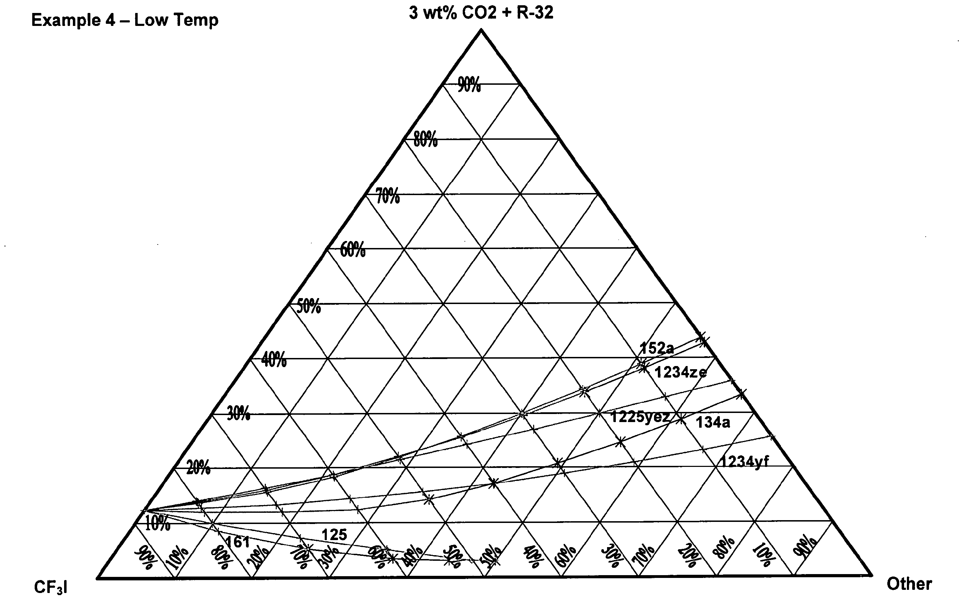

Example 1 is repeated except that the first component of the heat transfer composition consists of 3 percent by weight of CO₂ and 99 percent by weight of HFC-32, and that the refrigerant whose capacity is to be matched is R-410A, and that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 4 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 5 - Low Temperature System with HFC-32/CO₂ and CF₃I

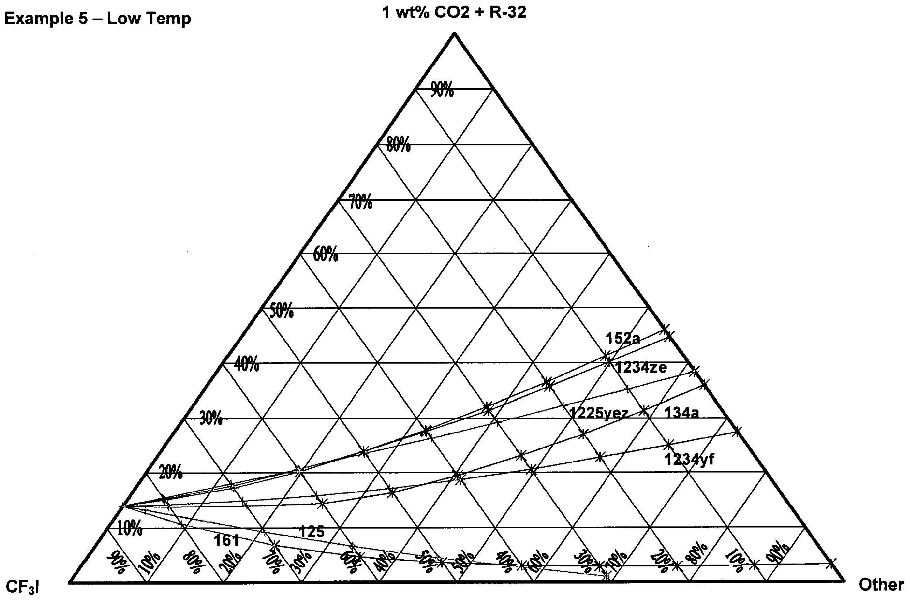

Example 1 is repeated except that the first component of the heat transfer composition consists of 1 percent by weight of CO₂ and 99 percent by weight of HFC-32, and that the refrigerant whose capacity is to be matched is R-410A, and that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 5 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 6 - Medium Temperature System with HFC-32 and HFO-1225

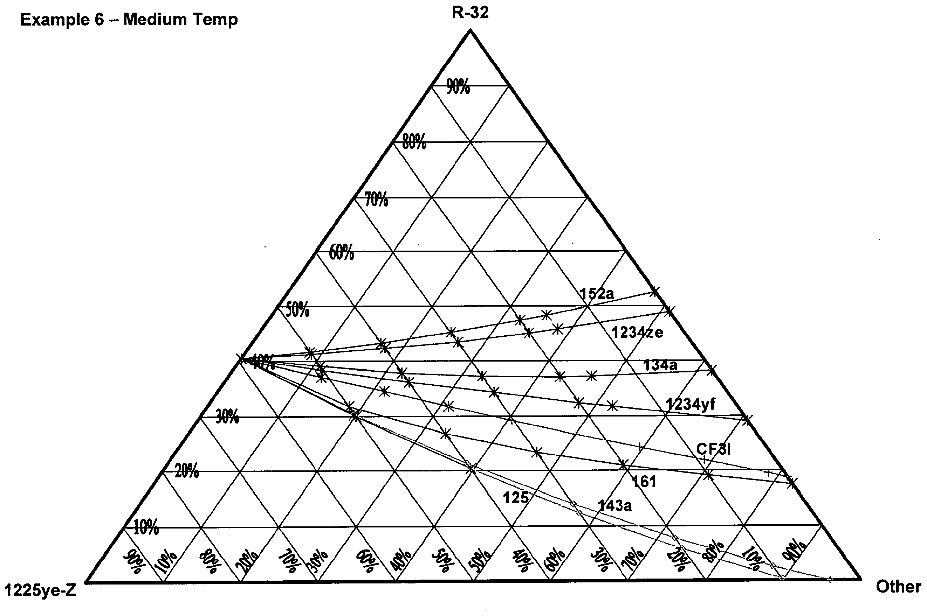

A refrigeration /air conditioning cycle system is simulated or provided with a condenser temperature is about 40°C, an evaporator temperature of about 2°C, a superheat of about 10°C, and a sub-cool temperature of about 5°C, and a compressor efficiency of 0.7, which would normally be considered typical "medium temperature" conditions. Several compositions are simulated and/or tested based on a first component consisting of HFC-32, a second component consisting of HFO-1225ye-Z and one of a series of third components. For each third component, the relative concentrations of all three components which substantially match the capacity of R-410A under the conditions mentioned above is determined. A curve of the various concentrations of each component for which the capacity substantially matches that of R-410A is then drawn or simulated (visually, mathematically, or a combination of each). An asterix is then placed on the curve to signify those compositions having a GWP of 1000 or less and a diamond is placed on the curve to signify those compositions having a GWP of greater than 1000. This procedure is repeated for all third component compounds and for the second component compound CF₃I. One example of a "tool" for selecting a refrigerant for this system is thus developed and is presented as the chart in Figure 6. The chart in Figure 6 is analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 7 - Low Temperature System with HFC-32 and HFO-1225

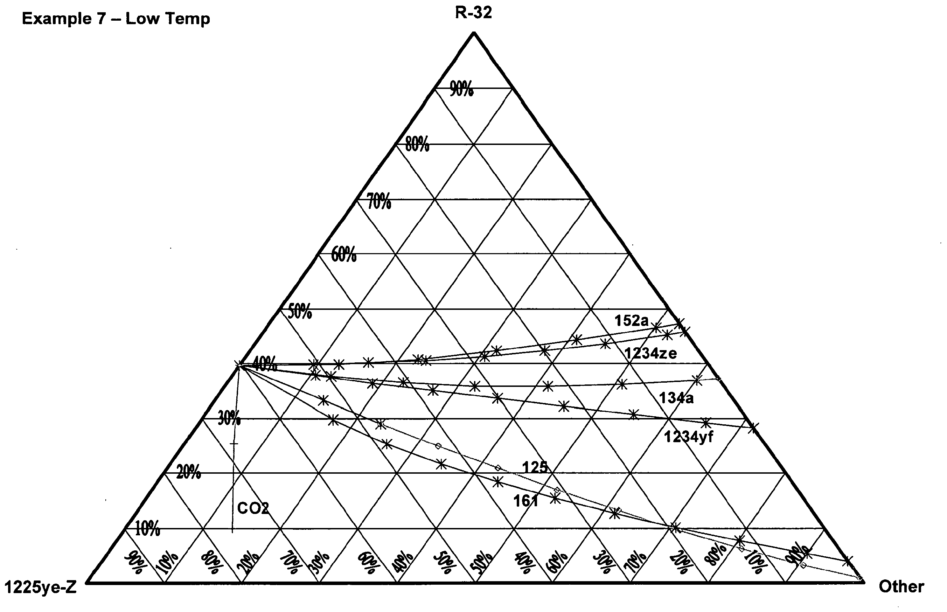

Example 6 is repeated except that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 7 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 8 - Medium Temperature System with HFC-32/CO₂ and HFO-1225

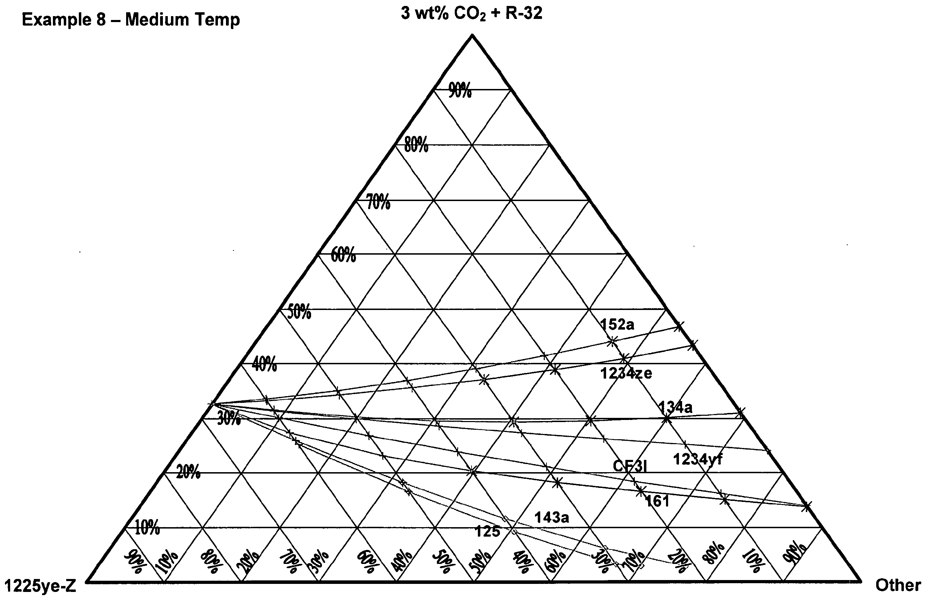

Example 6 is repeated except that the first component of the heat transfer composition consists of 3 percent by weight of CO₂ and 97 percent by weight of HFC-32. The chart in Figure 8 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 9 - Medium Temperature System with HFC-32/CO₂ and HFO-1225

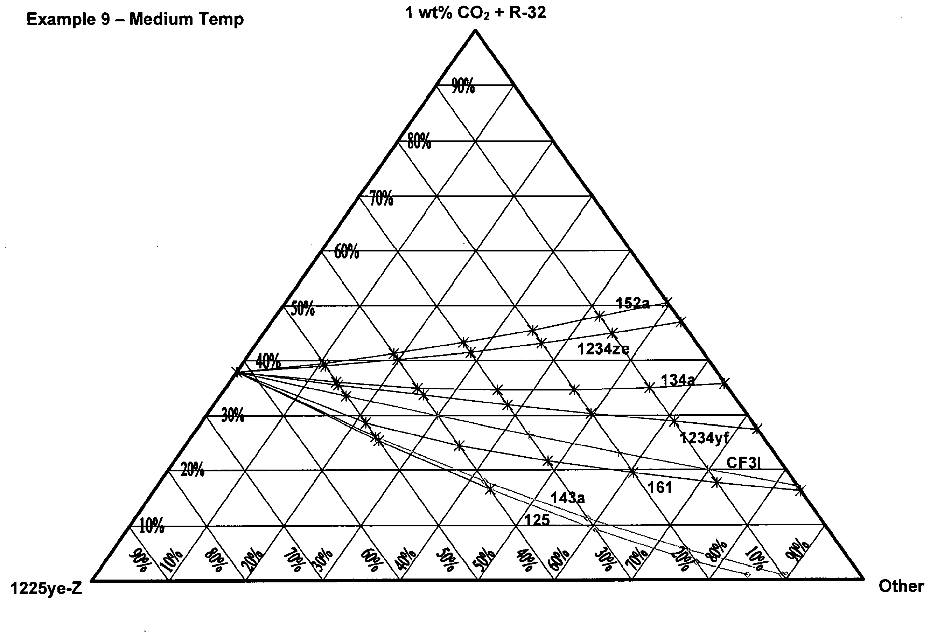

Example 6 is repeated except that the first component of the heat transfer composition consists of 1 percent by weight of CO₂ and 97 percent by weight of HFC-32. The chart in Figure 9 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 10 - Low Temperature System with HFC-32/CO₂ and HFO-1225

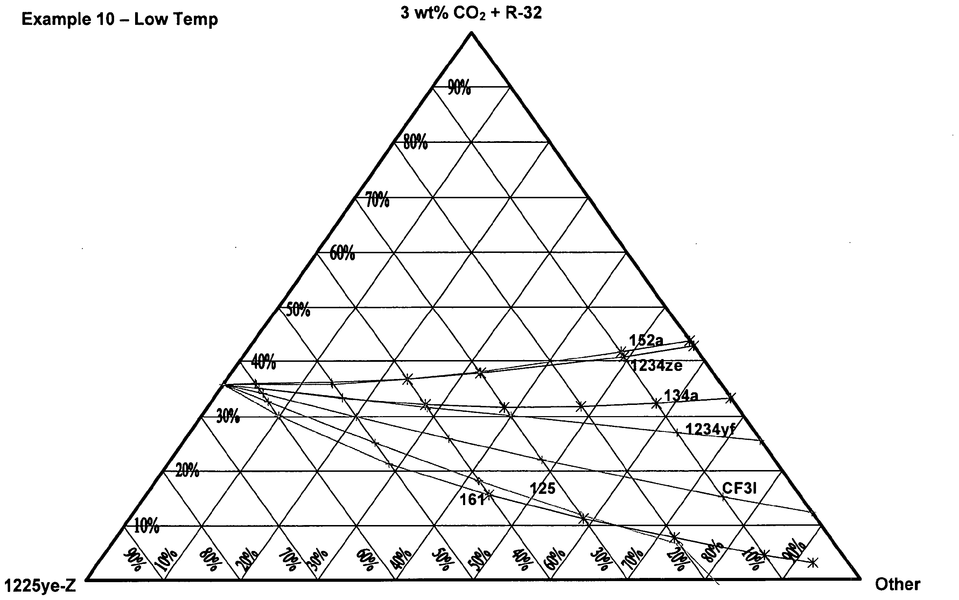

Example 6 is repeated except that the first component of the heat transfer composition consists of 3 percent by weight of CO₂ and 97 percent by weight of HFC-32 and that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 10 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 11 - Low Temperature System with HFC-32/CO₂ and HFO-1225

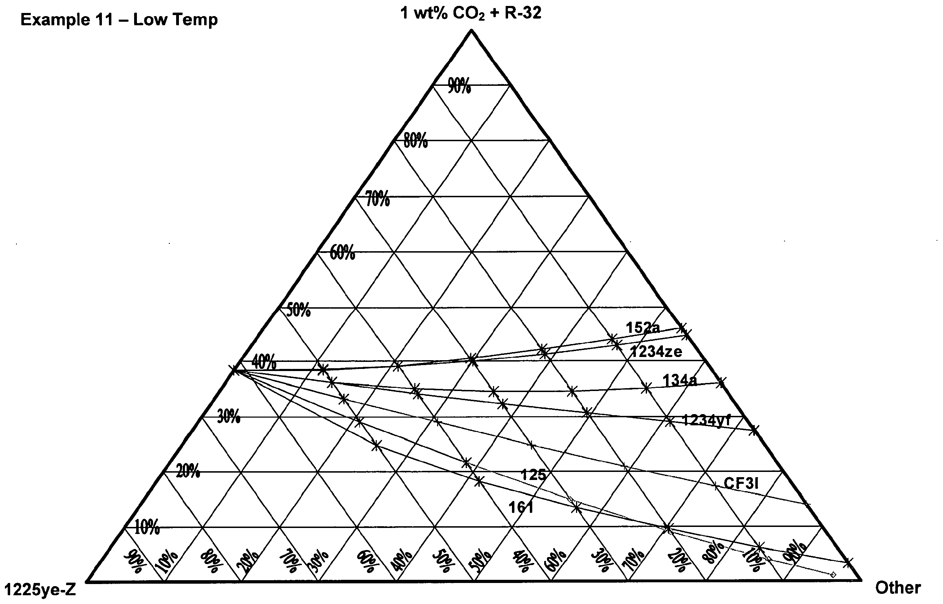

Example 6 is repeated except that the first component of the heat transfer composition consists of 1 percent by weight of CO₂ and 99 percent by weight of HFC-32 and that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 11 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 12 - Low Temperature System with HFC-32 and CF₃I

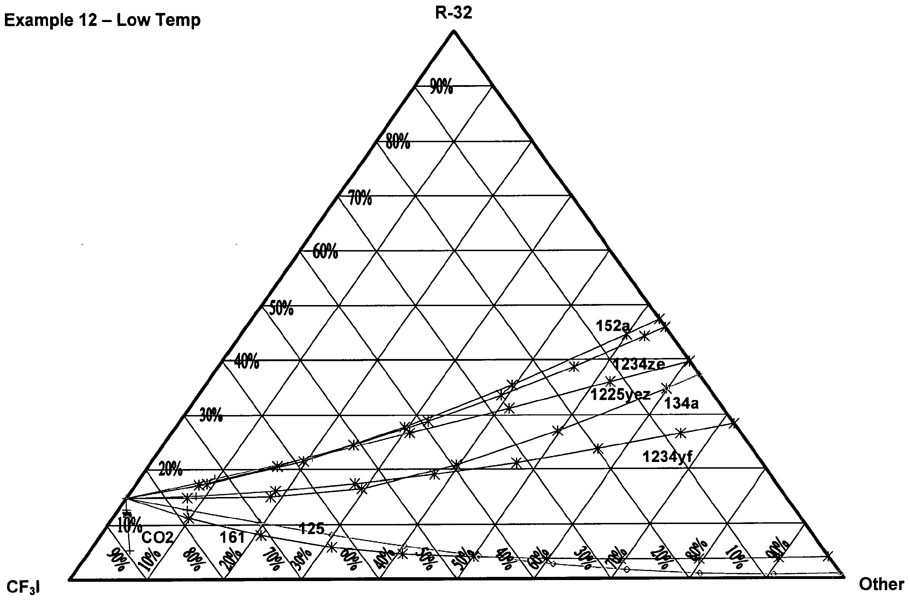

Example 1 is repeated except that the conditions are a condenser temperature of about 45°C, an evaporator temperature of about -34°C, a superheat of about 10°C, and a sub-cool temperature of about 5°C, and a compressor efficiency of 0.7, which would normally be considered typical "low temperature" conditions. The chart in Figure 12 is developed and analyzed to identify compositions which fall on or about the curves and for which GWP is less than about 1000. This identification is preferably preceded or followed by an analysis of the flammability of the compositions, and then a selection is made of a composition to use as an original component of such system or as a replacement or retrofit to such an existing system.

### REFERENCE EXAMPLE 13

The vapor liquid equilibrium (VLE) of a mixture of HFO-1234ze(E) and R-32 was measured by 2 separate methods. The first method is an open ebulliometer which measures the bubble point temperature of a mixture at atmospheric pressure which is shown in Table 3. The second method is in a sealed system which allows for pressures above atmospheric which is shown in Table 4.

**Table 3: Ebulliometer Data of HFO-1234ze(E) + R-32**

| | | **Liquid, wt%** | |
|---|---|---|---|
| **T, °C** | **P, psia** | HFO-**1234ze(E)** | **R-32** |
| -18.8 | 14.39 | 100.0 | 0.0 |
| -26.3 | 14.39 | 94.8 | 5.2 |
| -29.0 | 14.39 | 90.4 | 9.6 |
| -31.8 | 14.39 | 86.4 | 13.6 |
| -35.4 | 14.39 | 74.6 | 25.4 |
| -38.4 | 14.39 | 64.6 | 35.4 |
| -40.6 | 14.39 | 53.2 | 46.8 |
| -42.4 | 14.39 | 48.2 | 51.8 |
| -43.7 | 14.39 | 42.9 | 57.1 |
| -44.9 | 14.39 | 39.8 | 60.2 |
| -47.3 | 14.39 | 36.5 | 63.5 |
| | | | |
| -19.1 | 14.52 | 100.0 | 0.0 |
| -22.9 | 14.52 | 98.4 | 1.6 |
| -30.3 | 14.52 | 91.2 | 8.8 |
| -34.1 | 14.52 | 83.1 | 16.9 |
| -37.0 | 14.52 | 75.7 | 24.3 |
| -38.7 | 14.52 | 69.7 | 30.3 |
| -40.0 | 14.52 | 63.6 | 36.4 |
| | | | |
| -51.4 | 14.23 | 0.0 | 100.0 |
| -51.5 | 14.23 | 0.5 | 99.5 |
| -51.2 | 14.23 | 2.8 | 97.2 |
| -50.4 | 14.23 | 5.0 | 95.0 |
| -49.1 | 14.23 | 23.6 | 76.4 |

**Table 4: VLE data for HFO-1234ze(E) + R-32**

| | | **Liquid, wt%** | |
|---|---|---|---|
| **T, °C** | **P, psia** | **HFO-1234ze(E)** | **R-32** |
| -3.6 | 48.7 | 93.4 | 6.6 |
| -3.6 | 48.0 | 93.4 | 6.6 |
| 1.4 | 32.5 | 100.0 | 0.0 |
| 1.1 | 44.1 | 96.2 | 3.8 |
| 1.3 | 46.1 | 96.2 | 3.8 |
| 1.4 | 42.3 | 96.2 | 3.8 |
| 1.3 | 51.1 | 93.4 | 6.6 |
| 1.7 | 57.1 | 93.4 | 6.6 |
| | | | |
| 21.7 | 72.9 | 96.2 | 3.8 |
| 21.9 | 75.4 | 96.2 | 3.8 |
| 21.9 | 73.8 | 96.2 | 3.8 |
| 21.5 | 81.4 | 93.4 | 6.6 |
| 21.6 | 84.9 | 93.4 | 6.6 |
| 21.6 | 86.0 | 93.4 | 6.6 |
| | | | |
| 40.8 | 116.7 | 100.0 | 0.0 |
| 41.1 | 116.0 | 100.0 | 0.0 |
| 41.7 | 134.8 | 96.2 | 3.8 |
| 41.7 | 138.5 | 96.2 | 3.8 |
| 41.7 | 139.5 | 96.2 | 3.8 |
| 41.5 | 145.2 | 93.4 | 6.6 |
| 41.6 | 151.2 | 93.4 | 6.6 |
| 41.6 | 155.7 | 93.4 | 6.6 |
| 41.6 | 155.4 | 93.4 | 6.6 |
| 41.6 | 153.4 | 93.4 | 6.6 |

### REFERENCE EXAMPLE 14

The VLE of a mixture of HFO-1234yf and R-32 was measured by 2 separate methods. The first method is an open ebulliometer which measures the bubble point temperature of a mixture at atmospheric pressure which is shown in Table 5. The second method is in a sealed system which allows for pressures above atmospheric which is shown in Table 6.

**Table 5: Ebulliometer Data of HFO-1234yf + R-32**

| | | **Liquid, wt%** | |
|---|---|---|---|
| **T, °C** | **P, psia** | **HFO-1234ze(E)** | **R-32** |
| -29.1 | 14.3 | 0.0 | 100.0 |
| -31.2 | 14.3 | 0.9 | 99.1 |
| -37.3 | 14.3 | 6.6 | 93.4 |
| -42.2 | 14.3 | 24.4 | 75.6 |
| -45.2 | 14.3 | 33.4 | 66.6 |
| -46.6 | 14.3 | 43.9 | 56.1 |
| -48.2 | 14.3 | 53.4 | 46.6 |
| -48.3 | 14.3 | 57.9 | 42.1 |
| -51.1 | 14.2 | 100.0 | 0.0 |
| -51.1 | 14.2 | 98.6 | 1.4 |
| -51.1 | 14.2 | 96.1 | 3.9 |
| -50.4 | 14.2 | 92.4 | 7.6 |
| -49.6 | 14.2 | 86.3 | 13.7 |
| -49.5 | 14.2 | 75.6 | 24.4 |
| -49.4 | 14.2 | 68.6 | 31.4 |

**Table 6: VLE data for HFO-1234yf + R-32**

| | | **Liquid, wt%** | |
|---|---|---|---|
| **T, °C** | **P, psia** | **HFO-1234ze(E)** | **R-32** |
| -8.4 | 40.8 | 4.3 | 95.7 |
| -8.5 | 48.7 | 9.6 | 90.4 |
| -8.3 | 73.2 | 32.6 | 67.4 |
| | | | |
| 16.6 | 91.6 | 4.3 | 95.7 |
| 16.3 | 111.0 | 9.6 | 90.4 |
| 16.5 | 151.3 | 32.6 | 67.4 |
| | | | |
| 41.9 | 186.0 | 4.3 | 95.7 |
| 41.9 | 215.8 | 9.6 | 90.4 |
| 42.1 | 289.9 | 32.6 | 67.4 |

### EXAMPLE 15

Using the data in Tables 3 and 4 performance of these refrigerants in a typical air conditioning application was evaluated. The conditions of the air conditioning cycle were:
Evaporator temperature = 2°C
Condenser temperature = 40°C
Sub-Cool = 5°C
Superheat = 10°C
Isentropic compressor efficiency = 0.7

Using these conditions the capacity, COP, compressor discharge temperature and condenser and evaporator glides have been calculated and are shown in Tables 7A and 7B. The cycle performance and GWP on the mixtures was also calculated and is shown in Tables 8A and 8B. One disadvantage to using pure R-32 is the high discharge temperature. The glide of the HFO-1234ze(E) + R-32 mixtures is < 9°C over all compositions and the glide of the HFO-1234yf + R-32 mixtures is < 7°C over all compositions.

**Table 7A: Air conditioning cycle analysis of HFO-1234ze(E) + R-32 blends**

| | **Pressure**, **psia** | | **Temperature, °C** | | |
|---|---|---|---|---|---|
| **Fluid** | **Evaporator** | **Condenser** | **Compressor Discharge** | **Evaporator Glide** | **Condenser Glide** |
| 404A | 93.3 | 264.3 | 61.2 | 0.4 | 0.3 |
| 410A | 123.5 | 351.3 | 77.2 | 0.1 | 0.1 |
| HFC-134a | 45.6 | 147.4 | 64.05 | 0.0 | 0.0 |
| HFO-1234ze(E) | 32.9 | 109.6 | 60.4 | 0.0 | 0.0 |
| 99 wt% 1234ze(E) + 1 wt% R-32 | 34.1 | 114.0 | 61.6 | 0.9 | 1.4 |
| 97 wt% 1234ze(E) + 3 wt% R-32 | 36.6 | 122.4 | 63.7 | 2.6 | 3.7 |
| 95 wt% 1234ze(E) + 5 wt% R-32 | 39.1 | 130.3 | 65.6 | 4.1 | 5.5 |
| 90 wt% 1234ze(E) + 10 wt% R-32 | 45.1 | 148.1 | 69.3 | 6.7 | 8.2 |
| 80 wt% 1234ze(E) + 20 wt% R-32 | 56.3 | 177.9 | 74.1 | 8.8 | 8.7 |
| 70 wt% 1234ze(E) + 30 wt% R-32 | 66.2 | 204.4 | 77.5 | 8.3 | 7.5 |
| 60 wt% 1234ze(E) + 40 wt% R-32 | 75.5 | 228.8 | 80.3 | 6.9 | 6.1 |
| 50 wt% 1234ze(E) + 50 wt% R-32 | 84.4 | 251.2 | 82.8 | 5.5 | 5.0 |
| 40 wt% 1234ze(E) + 60 wt% R-32 | 92.6 | 272.4 | 85.4 | 4.3 | 4.2 |
| 30 wt% 1234ze(E) + 70 wt% R-32 | 100.5 | 293.0 | 88.2 | 3.5 | 3.5 |
| 20 wt% 1234ze(E) + 80 wt% R-32 | 108.3 | 313.7 | 91.0 | 2.7 | 2.8 |
| 10 wt% 1234ze(E) + 90 wt% R-32 | 116.4 | 335.2 | 93.8 | 1.7 | 1.8 |
| R-32 | 125.7 | 359.5 | 95.8 | 0.0 | 0.0 |

**Table 7B: Air conditioning cycle analysis of HFO-1234yf + R-32 blends**

| | **Pressure**, **psia** | | **Temperature, °C** | | |
|---|---|---|---|---|---|
| **Fluid** | **Evaporator** | **Condenser** | **Compressor Discharge** | **Evaporator Glide** | **Condenser Glide** |
| 404A | 93.3 | 264.3 | 61.2 | 0.4 | 0.3 |
| 410A | 123.5 | 351.3 | 77.2 | 0.1 | 0.1 |
| HFC-134a | 45.6 | 147.4 | 64.05 | 0.0 | 0.0 |
| HFO-1234yf | 48.5 | 145.3 | 55.6 | 0.0 | 0.0 |
| 99 wt% 1234yf + 1 wt% R-32 | 50.0 | 150.2 | 56.6 | 0.7 | 1.1 |
| 97 wt% 1234yf + 3 wt% R-32 | 52.8 | 159.6 | 58.4 | 1.8 | 2.9 |
| 95 wt% 1234yf + 5 wt% R-32 | 55.7 | 168.4 | 60.0 | 2.9 | 4.3 |
| 90 wt% 1234yf + 10 wt% R-32 | 62.5 | 188.4 | 63.4 | 4.7 | 6.4 |
| 80 wt% 1234yf + 20 wt% R-32 | 74.9 | 221.7 | 68.1 | 6.0 | 6.8 |
| 70 wt% 1234yf + 30 wt% R-32 | 85.5 | 249.9 | 71.7 | 5.3 | 5.7 |
| 60 wt% 1234yf + 40 wt% R-32 | 94.7 | 273.9 | 74.8 | 4.1 | 4.3 |
| 50 wt% 1234yf + 50 wt% R-32 | 102.5 | 294.4 | 77.9 | 2.9 | 3.1 |
| 40 wt% 1234yf + 60 wt% R-32 | 109.1 | 311.7 | 81.0 | 1.9 | 2.1 |
| 30 wt% 1234yf + 70 wt% R-32 | 114.5 | 326.4 | 84.4 | 1.2 | 1.4 |
| 20 wt% 1234yf + 80 wt% R-32 | 118.9 | 339.0 | 88.1 | 0.6 | 0.8 |
| 10 wt% 1234yf + 90 wt% R-32 | 122.6 | 349.9 | 91.8 | 0.3 | 0.4 |
| R-32 | 125.7 | 359.5 | 95.8 | 0.0 | 0.0 |

**Table 8A: Air conditioning performance of HFO-1234ze(E) + R-32 blends**

| **Fluid** | **Relative to 134a** | **Capacity Relative to 404A** | **Relative to 410A** | **Relative to 134a** | **COP Relative to 404A** | **Relative to 410A** | **GWP** |
|---|---|---|---|---|---|---|---|
| 404A | | 1 | | | 1 | | 3784 |
| 410A | | | 1 | | | 1 | 1975 |
| HFC-134a | 1 | | | 1 | | | 1300 |
| HFO-1234ze(E) | 0.74 | 0.45 | 0.32 | 1.00 | 1.08 | 1.08 | 10 |
| 99 wt% 1234ze(E) + 1 wt% R-32 | 0.76 | 0.47 | 0.33 | 1.00 | 1.08 | 1.08 | 15 |
| 97 wt% 1234ze(E) + 3 wt% R-32 | 0.81 | 0.50 | 0.36 | 1.00 | 1.07 | 1.07 | 26 |
| 95 wt% 1234ze(E) + 5 wt% R-32 | 0.86 | 0.53 | 0.38 | 0.99 | 1.07 | 1.07 | 37 |
| 90 wt% 1234ze(E) + 10 wt% R-32 | 0.98 | 0.60 | 0.43 | 0.98 | 1.06 | 1.06 | 64 |
| 80 wt% 1234ze(E) + 20 wt% R-32 | 1.18 | 0.72 | 0.51 | 0.96 | 1.04 | 1.04 | 118 |
| 70 wt% 1234ze(E) + 30 wt% R-32 | 1.33 | 0.81 | 0.58 | 0.94 | 1.02 | 1.02 | 172 |
| 60 wt% 1234ze(E) + 40 wt% R-32 | 1.49 | 0.91 | 0.65 | 0.94 | 1.01 | 1.01 | 226 |
| 50 wt% 1234ze(E) + 50 wt% R-32 | 1.64 | 1.00 | 0.72 | 0.94 | 1.01 | 1.01 | 280 |
| 40 wt% 1234ze(E) + 60 wt% R-32 | 1.80 | 1.10 | 0.79 | 0.94 | 1.01 | 1.01 | 334 |
| 30 wt% 1234ze(E) + 70 wt% R-32 | 1.95 | 1.19 | 0.85 | 0.94 | 1.01 | 1.01 | 388 |
| 20 wt% 1234ze(E) + 80 wt% R-32 | 2.11 | 1.29 | 0.92 | 0.94 | 1.01 | 1.01 | 442 |
| 10 wt% 1234ze(E) + 90 wt% R-32 | 2.28 | 1.39 | 1.00 | 0.94 | 1.01 | 1.01 | 496 |
| R-32 | 2.47 | 1.51 | 1.08 | 0.94 | 1.01 | 1.01 | 550 |

**Table 8B: Air conditioning performance of HFO-1234yf + R-32 blends**

| **Fluid** | **Relative to 134a** | **Capacity Relative to 404A** | **Relative to 410A** | **Relative to 134a** | **COP Relative to 404A** | **Relative to 410A** | **GWP** |
|---|---|---|---|---|---|---|---|
| 404A | | 1 | | | 1 | | 3784 |
| 410A | | | 1 | | | 1 | 1975 |
| HFC-134a | 1 | | | 1 | | | 1300 |
| HFO-1234yf | 0.95 | 0.58 | 0.42 | 0.98 | 1.06 | 1.05 | 6 |
| 99 wt% 1234yf + 1 wt% R-32 | 0.98 | 0.60 | 0.43 | 0.98 | 1.06 | 1.05 | 11 |
| 97 wt% 1234yf + 3 wt% R-32 | 1.04 | 0.63 | 0.46 | 0.98 | 1.06 | 1.05 | 22 |
| 95 wt% 1234yf + 5 wt% R-32 | 1.09 | 0.67 | 0.48 | 0.98 | 1.06 | 1.05 | 33 |
| 90 wt% 1234yf + 10 wt% R-32 | 1.23 | 0.75 | 0.54 | 0.97 | 1.05 | 1.05 | 60 |
| 80 wt% 1234yf + 20 wt% R-32 | 1.46 | 0.89 | 0.64 | 0.96 | 1.04 | 1.04 | 115 |
| 70 wt% 1234yf + 30 wt% R-32 | 1.64 | 1.00 | 0.72 | 0.95 | 1.03 | 1.03 | 169 |
| 60 wt% 1234yf + 40 wt% R-32 | 1.80 | 1.10 | 0.79 | 0.94 | 1.02 | 1.02 | 224 |
| 50 wt% 1234yf + 50 wt% R-32 | 1.95 | 1.19 | 0.85 | 0.94 | 1.02 | 1.02 | 278 |
| 40 wt% 1234yf + 60 wt% R-32 | 2.08 | 1.27 | 0.91 | 0.94 | 1.02 | 1.02 | 332 |
| 30 wt% 1234yf + 70 wt% R-32 | 2.19 | 1.34 | 0.96 | 0.94 | 1.02 | 1.02 | 387 |
| 20 wt% 1234yf + 80 wt% R-32 | 2.29 | 1.40 | 1.00 | 0.94 | 1.02 | 1.01 | 441 |
| 10 wt% 1234yf + 90 wt% R-32 | 2.39 | 1.46 | 1.04 | 0.94 | 1.02 | 1.01 | 496 |
| R-32 | 2.47 | 1.51 | 1.08 | 0.94 | 1.01 | 1.01 | 550 |

### EXAMPLE 16

Using the data in Tables 3 and 4 performance of these refrigerants in a low temperature application was evaluated. The conditions of the low temperature cycle were:
Evaporator temperature = -34°C
Condenser temperature = 45°C
Sub-Cool = 10°C
Superheat = 10°C
Isentropic compressor efficiency = 0.7

Using these conditions the capacity, COP, compressor discharge temperature and condenser and evaporator glides have been calculated and are shown in Tables 9A and 9B. The cycle performance and GWP on the mixtures was also calculated and is shown in Tables 10A and 10B. One disadvantage to using pure R-32 is the high discharge temperature. The glide of the HFO-1234ze(E) + R-32 mixtures is < 9°C over all compositions and the glide of the HFO-1234yf + R-32 mixtures is < 7°C over all compositions.

**Table 9A: Low Temperature cycle analysis of HFO-1234ze(E) + R-32 blends**

| | **Pressure** , **psia** | | **Temperature, °C** | | |
|---|---|---|---|---|---|
| **Fluid** | **Evaporator** | **Condenser** | **Compressor Discharge** | **Evaporator Glide** | **Condenser Glide** |
| 404A | 25.0 | 297.6 | 83.5 | 0.4 | 0.3 |
| 410A | 33.1 | 395.9 | 124.5 | 0.1 | 0.1 |
| HFO-1234ze(E) | 6.9 | 125.3 | 85.2 | 0.0 | 0.0 |
| 90 wt% 1234ze(E) + 10 wt% R-32 | 9.3 | 168.1 | 100.6 | 3.8 | 7.8 |
| 80 wt% 1234ze(E) + 20 wt% R-32 | 12.2 | 201.6 | 111.1 | 6.9 | 8.3 |
| 70 wt% 1234ze(E) + 30 wt% R-32 | 15.3 | 231.5 | 119.8 | 8.1 | 7.1 |
| 60 wt% 1234ze(E) + 40 wt% R-32 | 18.1 | 258.8 | 127.8 | 7.4 | 5.8 |
| 50 wt% 1234ze(E) + 50 wt% R-32 | 20.9 | 284.0 | 135.2 | 5.8 | 4.7 |
| 40 wt% 1234ze(E) + 60 wt% R-32 | 23.5 | 307.7 | 142.5 | 4.3 | 3.9 |
| 30 wt% 1234ze(E) + 70 wt% R-32 | 26.0 | 330.8 | 150.3 | 3.1 | 3.3 |
| 20 wt% 1234ze(E) + 80 wt% R-32 | 28.4 | 354.0 | 158.8 | 2.2 | 2.7 |
| 10 wt% 1234ze(E) + 90 wt% R-32 | 30.8 | 378.2 | 167.4 | 1.4 | 1.7 |
| R-32 | 33.5 | 405.4 | 175.4 | 0.0 | 0.0 |

**Table 9B: Low Temperature cycle analysis of HFO-1234yf + R-32 blends**

| | **Pressure , psia** | | **Temperature, °C** | | |
|---|---|---|---|---|---|
| **Fluid** | **Evaporator** | **Condenser** | **Compressor Discharge** | **Evaporator Glide** | **Condenser Glide** |
| 404A | 3.6 | 43.2 | 83.5 | 0.4 | 0.3 |
| 410A | 4.8 | 57.4 | 124.5 | 0.1 | 0.1 |
| HFO-1234yf | 12.0 | 164.5 | 72.2 | 0.0 | 0.0 |
| 90 wt% 1234yf + 10 wt% R-32 | 15.3 | 212.5 | 85.8 | 2.6 | 6.2 |
| 80 wt% 1234yf + 20 wt% R-32 | 18.7 | 250.1 | 96.2 | 4.2 | 6.6 |
| 70 wt% 1234yf + 30 wt% R-32 | 22.0 | 281.8 | 105.4 | 4.3 | 5.5 |
| 60 wt% 1234yf + 40 wt% R-32 | 24.8 | 308.9 | 114.3 | 3.5 | 4.2 |
| 50 wt% 1234yf + 50 wt% R-32 | 27.2 | 331.9 | 123.1 | 2.4 | 3.0 |
| 40 wt% 1234yf + 60 wt% R-32 | 29.2 | 351.4 | 132.4 | 1.4 | 2.1 |
| 30 wt% 1234yf + 70 wt% R-32 | 30.7 | 367.9 | 142.3 | 0.8 | 1.4 |
| 20 wt% 1234yf + 80 wt% R-32 | 31.9 | 382.2 | 152.9 | 0.4 | 0.8 |
| 10 wt% 1234yf + 90 wt% R-32 | 32.8 | 394.5 | 163.9 | 0.1 | 0.4 |
| R-32 | 33.5 | 405.4 | 175.4 | 0.0 | 0.0 |

**Table 10A: Low Temperature performance of HFO-1234ze(E) + R-32 blends**

| | **Capacity** | | **COP** | | |
|---|---|---|---|---|---|
| **Fluid** | **Relative to 404A** | **Relative to 410A** | **Relative to 404A** | **Relative to 410A** | **GWP** |
| 404A | 1.0 | | 1.0 | | 3784 |
| 410A | | 1.0 | | 1.0 | 1975 |
| HFO-1234ze(E) | 0.38 | 0.25 | 1.14 | 1.06 | 10 |
| 90 wt% 1234ze(E) + 10 wt% R-32 | 0.50 | 0.32 | 1.10 | 1.02 | 64 |
| 80 wt% 1234ze(E) + 20 wt% R-32 | 0.64 | 0.41 | 1.09 | 1.01 | 118 |
| 70 wt% 1234ze(E) + 30 wt% R-32 | 0.78 | 0.50 | 1.08 | 1.00 | 172 |
| 60 wt% 1234ze(E) + 40 wt% R-32 | 0.91 | 0.58 | 1.08 | 1.00 | 226 |
| 50 wt% 1234ze(E) + 50 wt% R-32 | 1.05 | 0.67 | 1.08 | 1.00 | 280 |
| 40 wt% 1234ze(E) + 60 wt% R-32 | 1.19 | 0.77 | 1.09 | 1.01 | 334 |
| 30 wt% 1234ze(E) + 70 wt% R-32 | 1.33 | 0.86 | 1.10 | 1.02 | 388 |
| 20 wt% 1234ze(E) + 80 wt% R-32 | 1.48 | 0.95 | 1.11 | 1.03 | 442 |
| 10 wt% 1234ze(E) + 90 wt% R-32 | 1.62 | 1.04 | 1.11 | 1.03 | 496 |
| R-32 | 1.78 | 1.15 | 1.12 | 1.04 | 550 |

**Table 10B: Low Temperature performance of HFO-1234yf + R-32 blends**

| | **Capacity** | | **COP** | | |
|---|---|---|---|---|---|
| **Fluid** | **Relative to 404A** | **Relative to 410A** | **Relative to 404A** | **Relative to 410A** | **GWP** |
| 404A | 1.0 | | 1.0 | | 3784 |
| 410A | | 1.0 | | 1.0 | 1975 |
| HFO-1234yf | 0.54 | 0.35 | 1.07 | 0.99 | 6 |
| 90 wt% 1234yf + 10 wt% R-32 | 0.71 | 0.46 | 1.08 | 1.00 | 60 |
| 80 wt% 1234yf + 20 wt% R-32 | 0.88 | 0.56 | 1.09 | 1.01 | 115 |
| 70 wt% 1234yf + 30 wt% R-32 | 1.04 | 0.67 | 1.09 | 1.01 | 169 |
| 60 wt% 1234yf + 40 wt% R-32 | 1.18 | 0.76 | 1.10 | 1.02 | 224 |
| 50 wt% 1234yf + 50 wt% R-32 | 1.32 | 0.85 | 1.11 | 1.03 | 278 |
| 40 wt% 1234yf + 60 wt% R-32 | 1.44 | 0.92 | 1.11 | 1.03 | 332 |
| 30 wt% 1234yf + 70 wt% R-32 | 1.54 | 0.99 | 1.12 | 1.04 | 387 |
| 20 wt% 1234yf + 80 wt% R-32 | 1.63 | 1.05 | 1.12 | 1.04 | 441 |
| 10 wt% 1234yf + 90 wt% R-32 | 1.71 | 1.10 | 1.12 | 1.04 | 496 |
| R-32 | 1.78 | 1.15 | 1.12 | 1.04 | 550 |

## Claims

1. The use of a refrigerant of a composition consisting of HFO-1234yf and HFC-32, wherein the composition comprises 30% by weight of HFO-1234yf relative to the total weight of HFO-1234yf and HFC-32 in the composition as a replacement for R410A.

2. The use as claimed in claim 1 wherein the composition is provided for use in air conditioning, refrigeration and heat pump systems.

3. The use as claimed in any one of claims 1 or 2, for use in air conditioning.

4. The use as claimed in any one of claims 1 to 3, wherein the air conditioning is selected from stationary air conditioning and mobile air conditioning.

5. The use as claimed in claim 1 wherein the use is in stationary refrigeration systems, preferably in stationary air conditioning units and stationary refrigeration.

6. The use as claimed in any one of claims 1 or 2 for use in low temperature applications.

7. The use as claimed in any one of claims 1 to 6 of a composition comprising a refrigerant as claimed in claim 1 and a lubricant selected from polyol esters (POEs), poly alkylene glycols (PAGs), PAG oils, silicone oil, mineral oil, alkyl benzenes (ABs) and poly(alpha-olefin) (PAO).

8. The use as claimed in claim 7 wherein the lubricant is present in an amount of from 30 to 50 wt% of the composition.

## Patentansprüche

1. Verwendung eines Kühlmittels einer Zusammensetzung, die aus HFO-1234yf und HFC-32 besteht, als Ersatz für R410A, wobei die Zusammensetzung 30 Gew.-% HFO-1234yf, bezogen auf das Gesamtgewicht von HFO-1234yf und HFC-32 in der Zusammensetzung, umfasst.

2. Verwendung nach Anspruch 1, wobei die Zusammensetzung zur Verwendung in Klimaanlagen-, Kälte- und Wärmepumpensystemen bereitgestellt wird.

3. Verwendung nach einem der Ansprüche 1 oder 2 zur Verwendung in Klimaanlagen.

4. Verwendung nach einem der Ansprüche 1 bis 3, wobei die Klimaanlage ausgewählt ist aus einer stationären Klimaanlage und einer mobilen Klimaanlage.

5. Verwendung nach Anspruch 1, wobei die Verwendung in stationären Kältesystemen, vorzugsweise in stationären Klimaanlageneinheiten und stationärer Kältetechnik erfolgt.

6. Verwendung nach einem der Ansprüche 1 oder 2 zur Verwendung bei Tieftemperaturanwendungen.

7. Verwendung nach einem der Ansprüche 1 bis 6 einer Zusammensetzung, umfassend ein Kühlmittel nach Anspruch 1 und ein Schmiermittel, ausgewählt aus Polyolestern (POEs), Polyalkylenglykolen (PAGs), PAG-Ölen, Silikonöl, Mineralöl, Alkylbenzolen (ABs) und Poly(alpha-olefin) (PAO).

8. Verwendung nach Anspruch 7, wobei das Schmiermittel in einer Menge von 30 bis 50 Gew.-% der Zusammensetzung vorhanden ist.

## Revendications

1. Utilisation d'un réfrigérant d'une composition constituée de HFO-1234yf et de HFC-32, dans laquelle la composition comprend 30 % en poids de HFO-1234yf par rapport au poids total de HFO-1234yf et de HFC-32 dans la composition en remplacement du R410A.

2. Utilisation selon la revendication 1, dans laquelle la composition est fournie pour une utilisation dans des systèmes de climatisation, de réfrigération et de pompe à chaleur.

3. Utilisation selon l'une quelconque des revendications 1 ou 2, pour une utilisation dans la climatisation.

4. Utilisation selon l'une quelconque des revendications 1 à 3, dans laquelle la climatisation est choisie parmi la climatisation fixe et la climatisation mobile.

5. Utilisation selon la revendication 1, dans laquelle l'utilisation est dans des systèmes de réfrigération fixe, de préférence dans des unités de climatisation fixe et en réfrigération fixe.

6. Utilisation selon l'une quelconque des revendications 1 ou 2 pour une utilisation dans des applications à basse température.

7. Utilisation selon l'une quelconque des revendications 1 à 6 d'une composition comprenant un réfrigérant selon la revendication 1 et un lubrifiant choisi parmi des esters de polyol (POE), des polyalkylène glycols (PAG), des huiles de PAG, de l'huile de silicone, de l'huile minérale, des alkylbenzènes (AB) et des poly(alpha-oléfine) (PAO).

8. Utilisation selon la revendication 7, dans laquelle le lubrifiant est présent en proportion de 30 à 50 % en poids de la composition.
